# EUROPÄISCHE PATENTSCHRIFT

(11) **EP 2 195 215 B1**
(45) Veröffentlichungstag und Bekanntmachung des Hinweises auf die Patenterteilung: **23.03.2011**
(21) Anmeldenummer: 08785046.7
(22) Anmeldetag: 24.07.2008
(51) Int. Cl.: B60T 7/10, F16D 51/00, F16D 65/14

(54) **HALTEBLECH FÜR DEN HANDBREMSHEBEL EINER TROMMELBREMSE BEI DER ERSTMONTAGE ZUR ERZEUGUNG EINER DAUERHAFTEN VORSPANNUNG DES BOWDENZUGES**
FIXING PLATE FOR AN EMERGENCY BRAKE LEVER OF A DRUM BRAKE IN THE INITIAL INSTALLATION FOR GENERATING A PERMANENT PRE-STRESSING OF THE BOWDEN CABLE
TOLE DE RETENUE POUR LE LEVIER DE FREIN A MAIN D'UN FREIN A TAMBOUR LORS DU PREMIER MONTAGE POUR PRODUIRE UNE PRECONTRAINTE DURABLE DU CABLE BOWDEN

(30) Priorität: 09.08.2007 DE 102007037671
(43) Veröffentlichungstag der Anmeldung: 16.06.2010
(73) Patentinhaber: Lucas Automotive GmbH, 56070 Koblenz (DE)
(72) Erfinder: HAACK, Oliver, 56072 Koblenz (DE)
(74) Vertreter: von Hellfeld, Axel
(86) Internationale Anmeldenummer: PCT/EP2008/006093
(87) Internationale Veröffentlichungsnummer: WO 2009/018927

(56) Entgegenhaltungen:
- EP-A- 1 136 718
- GB-A- 2 088 501
- US-B1- 6 241 051

## Beschreibung

Die Erfindung betrifft ein Halteblech für den Handbremshebel einer Trommelbremse bei ihrer Erstmontage zur Erzeugung einer dauerhaften Vorspannung des Bowdenzuges.

Trommelbremsen für heute übliche Personenkraftwagen werden sowohl für die Betriebsbremse als auch in besonderem Maße für die Feststellbremse eingesetzt. Trommelbremsen haben sich seit vielen Jahrzehnten bewährt.

Sie weisen üblicherweise zwei bogenförmige Bremsbacken auf, die auf einer Ankerplatte getragen und abgestützt werden. Eine Bremstrommel überträgt die Drehbewegung des abzubremsenden oder das Drehmoment eines an einer Drehung zu hindernden Rades auf die Bremsbacken. Hierzu werden die Bremsbacken gegen die Bremstrommel bewegt und in Reibeingriff mit ihr gebracht. Die von den Bremsbacken aufgenommene Mitnahmekraft der Bremstrommel stützen sie in der Ankerplatte ab.

Um die Bremsbacken in Reibeingriff mit der Bremstrommel zu bringen, wird für die Betriebsbremse ein Radbremszylinder vorgesehen, der zwei Kolben enthält, welche bei Beaufschlagung mittels Hydraulikdruckes die Bremsbacken gegen die Bremstrommel bewegen und sie an diese andrücken. Die Erzeugung des Hydraulikdruckes geschieht durch Niedertreten des Bremspedals, wodurch im Hauptbremszylinder ein Kolben Hydraulikflüssigkeit durch die Bremsleitung zu dem Radbremszylinder drückt.

Für die Feststellbremse wird ein Bowdenzug vorgesehen, dessen eines Ende im Fahrgastraum endet, wobei seine Hülle sich an der Konsole abstützt, und das Handbremsseil mit dem Handbremsstock verbunden ist, wobei durch Ziehen des Handbremsstockes eine Zugkraft auf das Handbremsseil ausgeübt wird, und dessen anderes Ende in der Trommelbremse endet, wobei die Hülle sich an der Ankerplatte abstützt, und die von dem Handbremsstock erzeugte Zugkraft mittels des Handbremsseiles an dem Handbremshebel zieht, wodurch dieser die beiden Bremsbacken auseinanderbewegt und gegen die Bremstrommel drückt.

Je nach Art der Einleitung der Betätigungskraft und nach Art der Abstützung der von der Bremstrommel erzeugten Reibkraft in die Ankerplatte, kann das Verhältnis der erzeugten Reibkraft zur aufgebrachten Betätigungskraft in weiten Grenzen gesteuert werden, so, dass eine große Selbstverstärkung die eine Grenze bildet, unter Inkaufnahme hoher Blockierneigung und großen Einflusses des Reibwertes zwischen den Reibflächen, und ein geringes Verhältnis von erzeugter Reibkraft zu aufgebrachter Betätigungskraft die andere Grenze bildet, mit dem Vorteil geringen Einflusses des Reibwertes auf die erzeugte Reibkraft, also eine sehr stabile Bremse.

Während früher Servobremsen, Trommelbremsen mit hoher Selbstverstärkung, vielfach eingesetzt wurden, wurde nach der Entwicklung und des Einsatzes von Bremskraftverstärkern mehr Wert auf die Stabilität der Bremse gelegt.

Von daher findet heute hauptsächlich eine Trommelbremskonstruktion Verwendung, die zwei Bremsbacken aufweist, von denen der eine, der Primärbacken, auflaufend wirkt, und der andere, der Sekundärbacken, ablaufend wirkt. Eine solche Trommelbremse hat einen guten Wirkungsgrad bei geringer Blockierneigung.

Im Laufe der Zeit verschleißen die Bremsbeläge und auch die Bremstrommel. Um diesen Verschleiß auszugleichen, denn bei den üblichen, hydraulisch betätigten Bremsen ist der Betätigungsweg des Bremspedals begrenzt und damit auch die im Hauptbremszylinder verschiebbare Menge an Hydraulikflüssigkeit, ebenso ist der Betätigungsweg des Handbremsstockes begrenzt und damit auch der Weg, um den das Handbremsseil aus der Hülle gezogen werden kann, werden diese Trommelbremsen mit einer selbsttätigen Nachstellung ausgestattet.

Selbstätige Nachstellungen für Trommelbremsen arbeiten sehr häufig mittels einer längenveränderbaren Strebe, die zwischen den beiden Bremsbacken angeordnet ist, und deren Länge in Abhängigkeit des Verschleißes mittels eines Klinken-Rastrad-Getriebes vergrößert wird. Solche Nachstellungen sind beispielsweise aus den Patentschriften DE 2 508 614, FR 2 161 654 und US 2 292 017 bekannt.

Diese selbsttätigen Nachstellungen bewirken im Allgemeinen nur, dass der Abstand zwischen der Reibfläche der Bremstrommel und den Reibflächen der Bremsbacken möglichst gleichbleibend ist. Dies betrifft sowohl den Verschleiß des Reibmateriales als auch den Verschleiß der Bremstrommel. Werden die Bremsbacken mittels der Strebe und des Klinken-Rastrad-Getriebes nachgestellt, so nehmen die Kolben in dem Radbremszylinder eine neue Lage ein, beispielsweise drückt eine zwischen den Kolben angeordnete Schraubendruckfeder sie auseinander. Hydraulikflüssigkeit strömt aus dem Vorratsbehälter über den Hauptbremszylinder nach und füllt den vergrößerten Raum zwischen den Kolben. Auch wird über die Strebe der Handbremshebel nachgestellt. Sowohl Betriebsbremse als auch Feststellbremse arbeiten über Jahre hinaus als solche sehr zuverlässig.

Allerdings setzt sich im Laufe der Jahre der Bowdenzug. Es entsteht eine gewisse Seillose. Dies wirkt sich dahingehend aus, dass trotz richtig nachgestellter Bremse bei Ziehen des Handbremsstockes die Feststellwirkung später erfolgt, der Handbremsstock muss um einige Zähne weitergezogen werden, bis die ursprüngliche Feststellwirkung eintritt.

Dieses Setzen wurde früher dadurch ausgeglichen, dass bei Wartungsarbeiten der Bowdenzug nachgestellt wurde. Auch sind im Stand der Technik Konstruktionen bekannt, die die Abnutzung und die Längung der Seilzüge oder Gestänge im Bereich des Bedienungshebels mittels Klemmgesperres, wobei die Klemmkörper Kugeln sind, oder einer Rastenverzahnung nachstellten, deutsche Patentschrift DE 444 779, oder auch mittels eines im Drehpunkt eines doppelarmigen Hebels, wobei an dem ersten Hebelarm die vom Fahrzeugführer erzeugte Betätigungskraft eingeleitet wurde und an dem zweiten Hebelarm diese Betätigungskraft übersetzt an die Bremse weitergeleitet wurde, angeordneten Ratschengetriebes, wobei beide Hebelarme durch Schraubenzugfedern unterschiedlicher Stärke derart um den Drehpunkt gezogen wurden, dass die stärkere Schraubenzugfeder den ersten Hebelarm auf eine Anschlag zog, und die zweite, schwächere Schraubenzugfeder den zweiten Hebelarm soweit zurückzog, wie es die Lose und die Verzahnung zuließ, französische Patentschrift FR 668 053.

Auch ist es ein seit Einführung des Bowdenzuges bestehender Arbeitsaufwand, dass der Bowdenzug nach seiner Montage, der Anbindung an den Handbremsstock im Fahrgastraum und der Anbindung an den Handbremshebel in der Trommelbremse derart eingestellt werden muss, dass einerseits keine Seillose vorhanden ist, was Verlustweg für den Handbremsstock bedeutet, und andererseits die Bremsbacken aber auch noch nicht in Reibeingriff mit der Bremstrommel stehen.

Im Stand der Technik ist eine Trommelbremse bekannt, deutsche Patentschrift DE 696 200, bei der bei gelöster Bremse ein Montagestift den Winkelhebel mit der Gelenkstange blockiert, wobei in diesem Zustand der Bowdenzug einjustiert wird. Danach wird der Montagestift wieder entfernt.

Aus der deutschen Patentschrift DE 10 220 016 ist eine Montagevorrichtung für den Seilzug einer Feststellbremse bekannt, bei der zur Ausschaltung der für einen einfachen Zusammenbau erforderlichen Seillose eine Haltevorrichtung vorgesehen ist, die eine Verschiebehülse und eine Festsetzhülse aufweist, wobei nach der Montage des Bowdenzuges die Verschiebehülse in der Festsetzhülse verschoben und mittels einer radial vorgespannten Feder gesichert wird.

Aus der deutschen Patentschrift DE 3 741 530 ist eine selbsttätige Nachstellvorrichtung für die Seile der Feststellbremse bekannt, die die relativ zueinander verschwenkbar gelagerten Hebelarme des Ausgleichsjoches mittels einer Drehfeder stets so zu verschwenken versucht, dass die Seile gespannt werden. Ein Ratschengetriebe lässt dabei eine Drehbewegung der Hebelarme nur im Sinne eines Nachspannens der Seile zu.

Aus der deutschen Patenschrift DE 4 023 047 ist ein Verfahren zur Montage einer vormontierten Handbremsvorrichtung bekannt. Hierbei wird, damit der Handbremsstock vertikal durch die Öffnung des Bodenbleches gebracht werden kann, der Bowdenzug in einer ersten Lage mittels einer federnden Rastverbindung an der Konsole fixiert, und in dieser Lage werden auch die Handbremsseile eingestellt, und nach Einbringen des Handbremsstockes in den Fahrgastraum wird die Konsole mittels einer Kolben-Zylinder-Einheit derart verschoben, dass die Konsole am Bodenblech verschraubt werden kann. Bei diesem Verschieben der Konsole nimmt der Bowdenzug seine Betriebslage ein.

Weitere Dokumente, die sich mit der Seillängung befassen, sich in den deutschen Patentschriften DE 315 182, DE 1 030 982, DE 4 040 779, DE 19 734 572 sowie in den deutschen Offenlegungsschriften DE 3 103 708 und DE 3 819 177.

Aus dem deutschen Gebrauchsmuster DE 8 811 920 ist eine mechanisch und hydraulisch betätigbare Scheibenbremse bekannt, bei der zur Einstellung der Seilvorspannung und zum Ausgleich der Seillängung bei der Erstmontage ein Abstandhalter aus Kunststoff zwischen einen gehäusefesten Anschlag und einem mit diesem gehäusefesten Anschlag zusammenwirkenden Anschlag des Handbremshebels eingebracht wird, so dass der durch eine Drehfeder normalerweise gegen den gehäusefesten Anschlag angepresste Handbremshebel sich für die Erstmontage auf diesem Abstandhalter abstützt. In diesem Zustand wird das Handbremsseil soweit unter Vorspannung gesetzt, bis der Abstandhalter ohne Kraftaufwand herausgenommen werden kann. Das Maß der Dicke des Abstandhalters ist auf das Setzverhalten des Bowdenzuges abgestimmt.

Aus dem deutschen Gebrauchsmuster DE 9 209 637 und der hierzu äquivalenten europäischen Patentschrift EP 579 178 ist eine Weiterentwicklung des aus dem vorherig genannten Gebrauchsmusters DE 8 811 920 bekannten Abstandhalters beschrieben, dahingehend, dass der Abstandhalter auch eine Zugkraft aufnehmen kann. Die Handbremsseile können nun sicherer maschinell eingestellt werden, ohne dass kleinere Schwankungen beim Anziehen der Stellmuttern des Bowdenzuges, verursacht durch Reibwertunterschiede des Gewindes und Toleranzen der Schrauber, zu nennenswerten Abweichungen des Abstandes des Anschlages des Handbremshebels von dem gehäusefesten Anschlag führen. Dies wird dadurch erreicht, dass der Bowdenzug bei dem Vorspannen einen sehr steilen Kraftanstieg und damit einen steilen Momentenanstieg des Schraubers erzeugt, wodurch dieser abschaltet. Nach dieser Grundeinstellung wird durch einmaliges festes Ziehen des Handbremsstockes der Abstandhalter zerrissen.

Die US 6,241,051 B1 beschreibt eine Bremssellanschlusseinrichtung zum-Befestigen eines Bremsseils an einem Bremshebel auf eine verdeckte Weise zum Reduzieren von Kosten und Gewicht der Bremseinrichtung. Die Verbindungseinrichtung ist aus einem U-förmigen Kanal, der an einem freien Ende des Bremshebels vorgesehen ist, und einer Führungseinheit zum automatischen Anbringen des Bremsseils am freien Ende des Bremshebels, wenn das Bremsseil in Richtung Bremshebel geschoben wird, ausgebildet. Die separat vom Bremshebel hergestellte Führungseinheit umfasst eine Seilaufnahmemulde, die in eine U-Form gebogen ist und im Kanal des Bremshebels angebracht ist, ein Führungselement zum Führen des Bremsseils in Richtung des freien Endes des Bremshebels und eine rampenförmige Oberfläche zum Ablenken des Bremsseils, wenn sich das Bremsseil entlang dessen Oberfläche zum Erzeugen einer Rückkraft im Bremsseil bewegt. Das Bremsseil schnappt in der Kabelaufnahmemulde durch die Rückkraft ein, wenn dessen Ende die Spitze der rampenartigen oberfläche passiert.

Aufgabe der Erfindung ist es, mit einfachen Mitteln bei einer Trommelbremse eine dauerhafte Vorspannung des Bowdenzuges sicherzustellen.

Die Aufgabe der Erfindung wird durch ein Halteblech nach Anspruch 1 und ein Verfahren nach Anspruch 6 gelöst.

Gelöst wird die Aufgabe gemäß der Erfindung auch dadurch, dass ein Halteblech den Handbremshebel mittels eines vorgespannten Federarmes in einer ersten Lage hält, der Bowdenzug mit einer Vorspannung versehen wird, die Feststellbremse betätigt wird, wobei das Schwenken des Handbremshebels ein Ausrasten des Federarmes ermöglicht, und wobei der Handbremshebel eine zweite mit der Seillängung veränderbare Lage einnimmt, in der er mittels einer Feder stets den Bowdenzug unter Vorspannung hält.

An mehreren Ausführungsbeispielen wird die Erfindung näher erläutert.

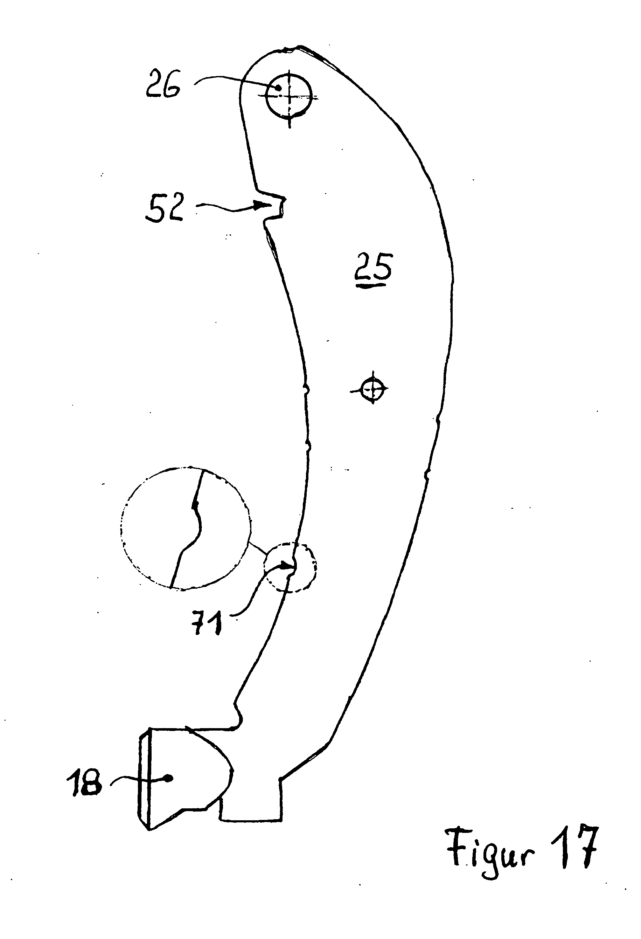

Es zeigen die Figuren 1 bis 19 das erste Ausführungsbeispiel:
- Figur 1:: eine übersicht der Betätigungsorgane für die Feststellbremse mit dem Handbremsstock dem Bowdenzug, der Trommelbremse und der Bremstrommel,
- Figur 2:: die Trommelbremse,
- Figur 3:: das Halteblech in perspektivischer Darstellung,
- Figur 4:: den Bremsbacken mit Handbremshebel, Rückstelifeder und dem Halte blech in perspektivischer Darstellung,
- Figur 5:: den Bremsbacken gemäß der Figur 4 in Vorderansicht,
- Figur 6:: den Bremsbacken gemäß der Figur 4 in Seitenansicht,
- Figur 7:: eine vergrößerte Schnittdarstellung der Lagerung des Handbremshebels an dem Stegblech des Bremsbackens,
- Figur 8:: eine erste Funktionsdarstellung des Bremsbackens mit eingehangenem Handbremsseil, wobei die in Figur 5 gezeigte Rückstellfeder den Hand- bremshebel über das Halteblech auf Anschlag am Stegblech hält: Einstellen der Grundvorspannung der Bowdenzüge,
- Figur 9:: eine Schnittdarstellung gemäß der Figur 8 durch den Handbremshebel, das Halteblech und den Bremsbacken,
- Figur 10:: eine zweite Funktionsdarstellung des Bremsbackens mit eingehange- nem Handbremsseil, wobei die in Figur 5 gezeigte Rückstellfeder den Handbremshebel zu dem Stegblech zieht, und der in Figur 1 gezeigte Handbremsstock den Handbremshebel mittels des Handbremsseiles weg von dem Stegblech zieht, und der Federarm des Haltebleches aus der Halterung am Stegblech ausgerastet ist: Ziehen am Handbrems- stock zur Beseitigung der Sperre,
- Figur 11:: eine Schnittdarstellung gemäß der Figur 10 durch den Handbremshebel, das Halteblech und den Bremsbacken,
- Figur 12:: eine dritte Funktionsdarstellung des Bremsbackens mit eingehangenem Handbremsseil, wobei die in Figur 5 gezeigte Rückstellfeder den Hand- bremshebel zu dem Stegblech zieht, und das Handbremsseil den Hand- bremshebel weg von dem Stegblech zieht, und der Federarm des Haltebleches sich unterhalb des Stegbleches befindet: Betriebsstellung des Handbremshebels,
- Figur 13:: eine Schnittdarstellung gemäß der Figur 12 durch den Handbremshebel, das Halteblech und den Bremsbacken,
- Figuren 14, 15: und 16: vergrößerte Darstellungen der Figuren 9, 11 und 13 als über sicht der Sperrens, des Ausrastens und des Betriebes
- Figur 17:: den Handbremshebel und eine vergrößerte Darstellung der Ausneh- mung zur Lagesicherung des Haltebleches,
- Figur 18:: den vergrößerten Bereich des Handbremshebels mit der Ausnehmung gemäß der Figur 17 und dem in der Ausnehmung gesicherten Halte- blech, soweit einen Teil des Stegbleches,
- Figur 19:: eine Schnittdarstellung gemäß der Figur 18, wobei das Stegblech von dem Halteblech umgriffen wird,
- Figur 20:: das zweite Ausführungsbeispiel,
- Figur 21:: das dritte Ausführungsbeispiel,
- Figur 22:: das vierte Ausführungsbeispiel.

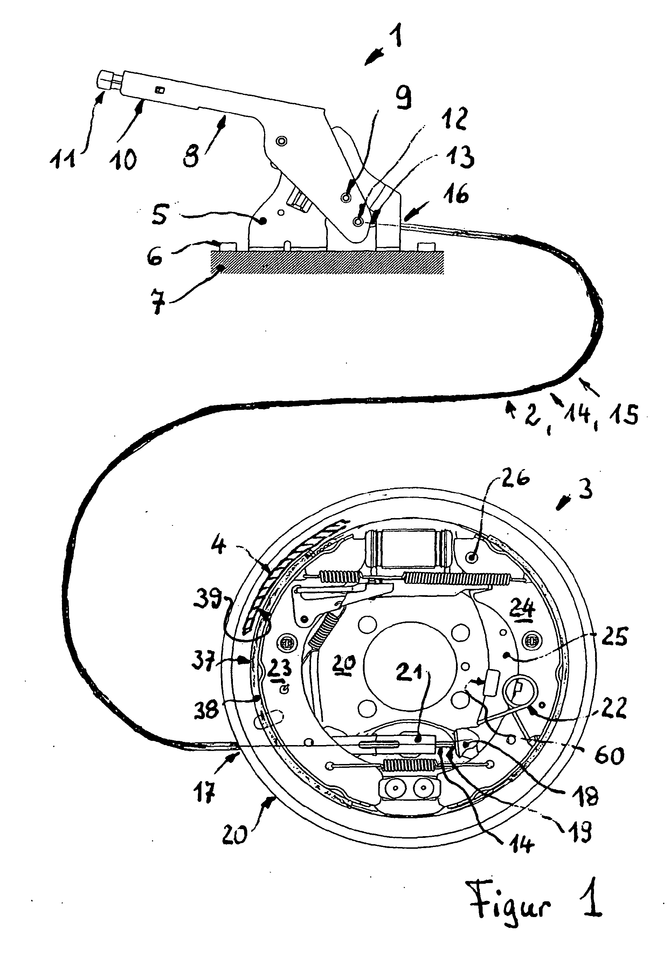

Die Figur 1 zeigt eine übersicht der Betätigungsorgane für eine Feststellbremse: die Betätigungseinrichtung (1), einen Bowdenzug (2), eine Trommelbremse (3) und eine Bremstrommel (4).

Die Betätigungseinrichtung (1) ist über eine Konsole (5) mittels Befestigungschrauben (6) mit der Karosserie (7) fest verbunden. Ein Handbremsstock (8) ist in der Konsole (5) gelagert und um eine Schwenkachse (9) in einem begrenzten Umfang von etwa 60 Grad schwenkbar. Der Handbremsstock (8) weist einen Handgriff (10) auf und einen in diesem gelagerten Entriegelungsknopf (11). Der Entriegelungsknopf (11) wirkt mit einem Entriegelungsgestänge (nicht gezeigt) zusammen, das innerhalb des Handbremsstockes (8) verläuft und mit einer Feststellklinke verbunden ist, welche in ein mit der Konsole fest verbundenes Zahnsegment eingreift. Das Zahnsegment ist als Sperrverzahnung ausgebildet. Ein Schwenken des Handbremsstockes (8) im Uhrzeigersinne bewirkt ein Gleiten der Feststellklinke über die Sperrverzahnung und ein stetes Einrasten der Feststellklinke in die Zahnlücken. Ein Zurückschwenken des Handbremsstockes (8) wird durch das Einrasten der Feststellklinke in die Zahnlücke blockiert. Durch Drücken des Entriegelungsknopfes (11) gegen die Kraft einer Druckfeder wird die Feststellklinke aus dem Eingriff in der Sperrverzahnung gelöst, und der Handbremsstock (8) kann nun zurückgeschwenkt werden. Die Funktion des vorstehend beschriebenen Entriegelungsgestänges ist als solches allgemein bekannt.

Am unteren Ende des Handbremsstockes (8) befindet sich ein Kopplungslager (12), das ein Kopplungsglied (13) der Seele des Bowdenzuges (2), ein Handbremsseil (14), aufnimmt. Das eine Ende (16) einer Hülle (15) des Bowdenzuges (2) ist mit einer Hüllenfassung in einem fahrzeugfesten Lager an der Konsole (5) gehalten und abgestützt. Das andere Ende (17) der Hülle (15) des Bowdenzuges (2) ist mit einer Hüllenfassung in einem fahrzeugfesten Lager an einer Ankerplatte (20) der Trommelbremse (3) abgestützt und gehalten. Die Seele des Bowdenzuges (2), also das Handbremsseil (14), durchdringt die Ankerplatte (20), durchläuft ein Führungsrohr (21) und ist mit einem Kopplungsglied (19) mit einem Kopplungslager (18) eines Handbremshebels (25) verbunden. Der Handbremshebel (25) ist über ein Lager (26) schwenkbar mit einem Sekundärbacken (24) verbunden.

Wird am Handgriff (10) des Handbremsstockes (8) eine Drehung des Handbremsstockes (8) um die Schwenkachse (9) im Uhrzeigersinne eingeleitet, so übt das Kopplungslager (12) über das Kopplungsglied (13) auf die Seele des Bowdenzuges (2), das Handbremsseil (14), eine Zugkraft aus. Diese Zugkraft pflanzt sich durch die Hülle (15) fort und wird über das Kopplungsglied (19) auf das Kopplungslager (18) des Handbremshebels (25) geleitet. Auf den Handbremshebel (25) wirkt entgegengesetzt zur Zugrichtung des Handbremsseiles (14) die Rückstellkraft der Rückstellfeder (22). Bei weiterem Ziehen am Handgriff (10) des Handbremsstockes (8) steigt die Zugkraft in der Seele des Bowdenzuges (29) an und der Handbremshebel (25) schwenkt um die Achse des Lagers (26).

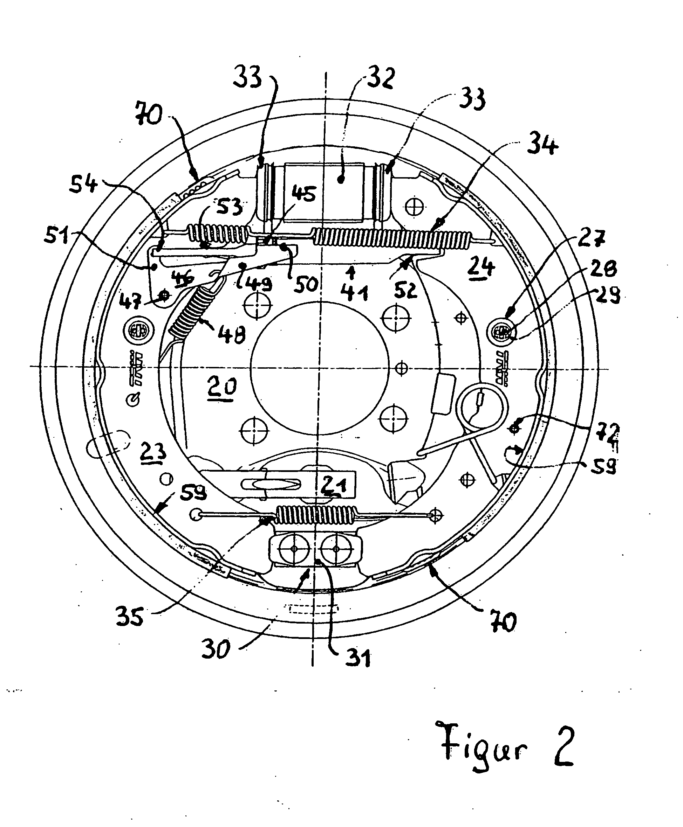

Die Figur 2 zeigt eine übliche in Großserie eingesetzte Trommelbremse (3). Sie ist als solche hinreichend bekannt und bedarf daher nur eines kurzen Abrisses.

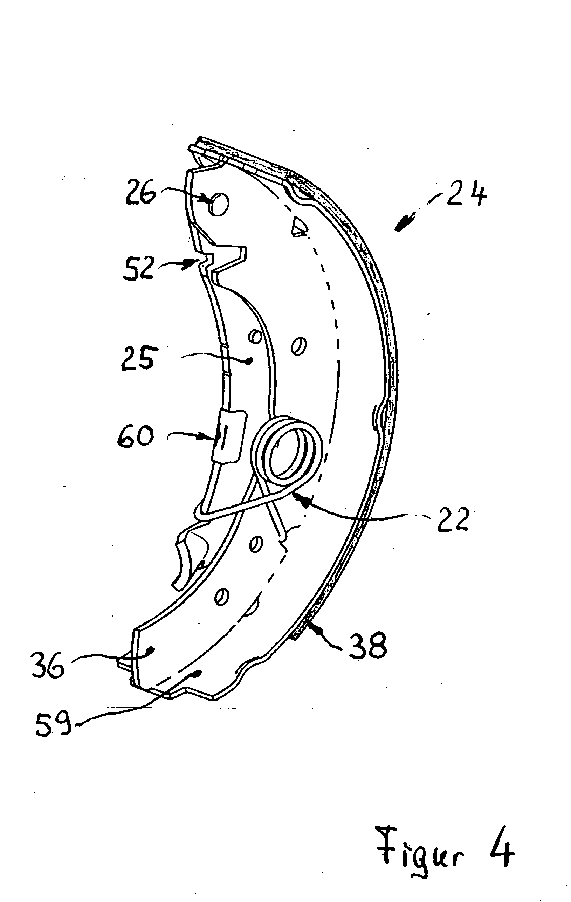

Auf der Ankerplatte (20) werden ein Primärbacken (23) und ein Sekundärbacken (24) mittels Niederhaltefedern (27), Niederhaltestiften (28) und Federtellern (29) gehalten. Das untere Ende des Primärbackens (23) und das untere Ende des Sekundärbackens (24) stützen sich in Umfangsrichtung mit den Enden ihrer Stegbleche (36) (Fig. 4) an einer Abstützplatte ab, die zwischen dem Dom (30) und der Anlageplatte (31) angeordnet ist. Die Anlageplatte (31) überdeckt die Abstützplatte und überragt mit ihrem rechten und linken Ende die Abstützplatte. Anlageplatte (31) und Abstützplatte sind zusammen mit dem Dom (30) vernietet. Die Anlageplatte (31) bildet für den Primär- und den Sekundärbacken (23, 24) eine weitere axiale Abstützung.

Zwischen dem oberen Ende des Primärbackens (23) und dem oberen Ende des Sekundärbackens (24) ist ein Radbremszylinder (32) angeordnet. In ihm befinden sich zwei Kolben. Die Kolben werden mittels Lippendichtringen abgedichtet. Manschettendichtungen (33) verhindern das Eindringen von Schmutz und Feuchtigkeit in den Radbremszylinder (32). Auf die Kolbenquerschnittsflächen wird der im Hauptbremszylinder mittels des Bremspedals erzeugte und gegebenenfalls durch einen Verstärker erhöhte oder durch eine Schlupfregelanlage verminderte hydraulische Druck geleitet.

Eine obere Rückzugfeder (34) und eine untere Rückzugfeder (35) sind in die Stegbleche (36) des Primärbackens (23) und des Sekundärbackens (24) eingehangen und ziehen diese stets soweit zueinander, bis einerseits der Primärbacken (23) an der einen Seite einer längenveränderbaren Strebe (41) anliegt und andererseits der Sekundärbacken (24) sich über das Lager (26) auf den Handbremshebel (25), von diesem über die Ausnehmung (52) auf der anderen Seite der längenveränderbaren Strebe (41) abstützt. Hierbei stützt das Kopplungslager (18) das durch die im Handbremshebel (25) über den Hebelarm in die Ausnehmung (52) geleitete Kraft erzeugte Drehmoment an dem Kopplungsglied (19) des Handbremsseiles (14) ab. Das Handbremsseil (14) leitet die durch das Drehmoment erzeugte Kraft über das konsolenseitige Kopplungsglied (13) in das Kopplungslager (12), wo sie über den Handbremsstock (8) und die Feststellklinke auf das mit der Konsole (5) festverbundene Zahnsegment geleitet wird.

Die von der oberen und der unteren Rückzugsfeder (34, 45) im unteren Bereich der Stegbleche (36) des Primärbackens (23) und des Sekundärbackens (24) wirkenden Kräfte werden über eine Abstützplatte, die mit dem Dom (30) vernietet ist, aufgenommen.

Nach Beendigung des Bremsvorganges und dem Zurückziehen des Primär- und Sekundärbackens (23, 24) nehmen die Reibflächen (37) der Bremsbeläge (38) stets einen Abstand, das Lüftspiel (40), zur Reibfläche (39) der Bremstrommel (4) ein. Das Lüftspiel, das die Summe des Abstandes der Reibfläche (37) des Primärbackens (23) zur Reibfläche (39) der Bremstrommel (4) und des Abstandes der Reibfläche (37) des Sekundärbackens (24) zur Reibfläche (39) der Bremstrommel (4) ist, beträgt bei üblichen Trommelbremsen (3) im Personenwagenbereich etwa 0,5 Millimeter.

Der richtige Abstand, das Lüftspiel (40), wird mittels einer selbsttätigen Nachstellung geregelt. Die längenveränderbare Strebe (41) besteht aus einer rohrförmigen Druckhülse (42), die sich mit ihrem rechten Ende in einer Ausnehmung (52) des Handbremshebels (25) abstützt und mit ihrem rohrförmigen linken Ende teleskopartig auf dem Gewinde der Druckstange (43) lagert und dieses hierdurch auch vor dem Zusetzen mit Bremsstaub schützt. Die Druckstange (43) stützt sich mit ihrem linken Ende in einer Ausnehmung (53) des Stegbleches (36) des Primärbackens (23) ab und lagert mit ihrem Gewinde aufweisenden rechten Abschnitt in der Druckhülse (42). Ein Nachstellritzel (44) weist ein Innengewinde auf, mit dem es auf dem Außengewinde der Druckstange (43) verschraubt ist. Die rechte Seitenwand des Nachstellritzels (44) bildet den Anschlag für die Druckhülse (42). Durch Drehen des Nachstellritzels (44) ist die Strebe (41) in ihrer Länge veränderbar.

Das Nachstellritzel (44) weist auf seinem Außenumfang eine Sperrverzahnung (45) auf. Ein zweiarmiger Nachstellhebel (46) ist drehbar um eine Spannhülse (47) gelagert. Der rechte Hebelarm (49) weist an seinem Ende eine Abwinkelung in Form einer Schaufel (50) auf, die in die Sperrverzahnung (45) eingreift. Der linke Hebelarm (51) greift in eine U-förmige Aussparung (54) der Druckstange ein. Eine Nachstellfeder (48) übt stets eine Zugkraft auf den rechten Hebelarm (49) aus, so dass dieser stets bestrebt ist, das Nachstellritzel (44) im Sinne eines Nachstellens zu drehen. Der vorstehend skizzierte Aufbau der Trommelbremse ist als solches dem Fachmann gut bekannt und wurde deshalb vorstehend nur mit Blick auf die wesentlichen Komponenten erläutert. Dies gilt auch für die nachfolgende Beschreibung der Betätigung der Trommelbremse.

Wird die Trommelbremse (3) hydraulisch betätigt, wird der Hauptteil der Rückzugskräfte der oberen und der unteren Rückzugsfeder (34, 35), die bei nicht betätigter Trommelbremse (3) auf der Strebe (41) abgestützt wurden, jetzt über die Kolben auf der Hydraulikflüssigkeit abgestützt. In diesem Zustand kann der rechte Hebelarm (49) mittels der Schaufel (50) das Nachstellritzel (44) drehen, sofern das Lüftspiel (49) derart groß geworden ist, dass die Bewegung der Schaufel (50) größer ist als der Abstand, bezogen auf die Länge auf der langen Zahnflanke des Zahnes der Sperrverzahnung (45), zwischen Beginn der Bewegung und Anliegen der Schaufel (50) an der kurzen Zahnflanke, so dass die Schaufel (50) die kurze Zahnflanke mitnimmt und damit das Nachstellritzel (44) minimal dreht.

Überschreitet bei Lösen der Bremse durch das Zurückdrehen des rechten Hebelarmes (49) die Bewegung der Schaufel (50) die Länge der langen Zahnflanke, so rastet die Schaufel (50) hinter die kurze Zahnflanke des nächsten Sperrzahnes ein.

Über die Länge der langen Zahnflanke, sofern die Sperrzähne am Umfang des Nachstellritzels (44) gleichmäßig verteilt sind und keine Zahnlücken vorhanden sind, und die Länge der beiden Hebelarme (49, 51) wird konstruktiv das Grundlüftspiel festgelegt.

Bei hydraulischer Betätigung der Trommelbremse (3) wird die Hydraulikflüssigkeit in dem Radbremszylinder (32) unter Druck gesetzt. Dieser Druck wirkt auf die Querschnittsflächen der beiden Kolben ein und erzeugt dem Druck und den Querschnittsflächen proportionale Kräfte, welche auf das obere Ende des Primärbackens (23) und das obere Ende des Sekundärbackens (24) geleitet werden. übersteigen diese Kräfte die ihnen entgegenwirkenden Kräfte der oberen und unteren Rückzugsfeder (34, 35), die Reibung der die Kolben im Radbremszylinder (32) abdichtenden Lippendichtringe sowie die Reibung der Belagbleche (59) auf den Auflageflächen (70) der Ankerplatte (20), so verschieben sich Primär- und Sekundärbacken (23, 24) zur Bremstrommel (4). Die Reibflächen (37) der Bremsbeläge (38) kommen in Reibeingriff mit der Reibfläche (39) der Bremstrommel (4). Die Reibkräfte werden über den Dom (30) in die fahrzeugfeste Ankerplatte (20) abgeleitet.

Die hydraulische Betätigung der Trommelbremse (3) wird üblicherweise als Betriebsbremse vorgesehen.

Bei mechanischer Betätigung der Trommelbremse (3) wird mittels des Handbremsstockes (8) über das Handbremsseil (14) eine Zugkraft auf den Handbremshebel (25) ausgeübt.

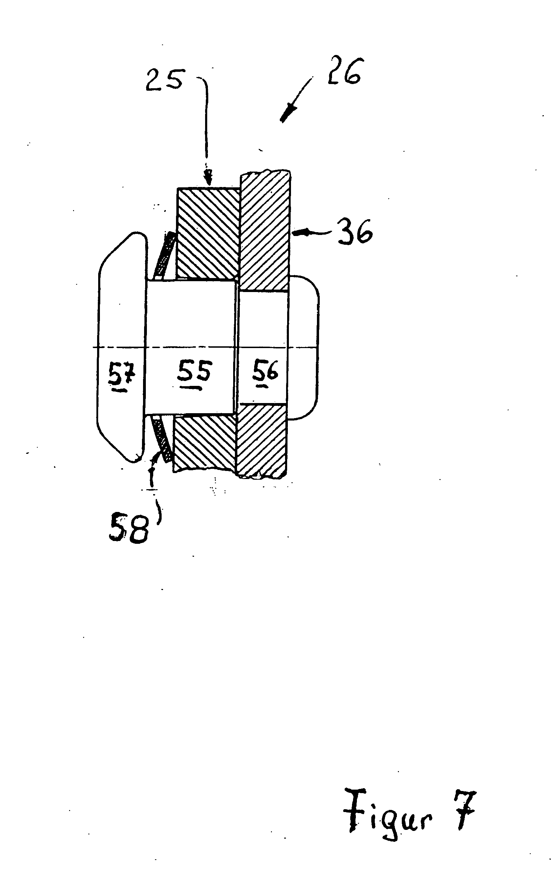

Der Handbremshebel (25) ist in seinem oberen Bereich, Figur 7, an dem Stegblech (36) des Sekundärbackens (24) gelagert. Das Lager (26) besteht aus einem Stufenzapfen (55), dessen abgesetzter Bereich (56) das Stegblech (36) durchgreift und mit ihm vernietet ist. Eine Tellerfeder (58) zwischen Kopf (57) und Handbremshebel (25) drückt den Handbremshebel (25) stets gegen das Stegblech (36), wobei sichergestellt ist, dass ein geringer Freiheitsgrad des Handbremshebels (25) ein Ausrichten des Kopplungslagers (18) zur Kraftrichtung des Bremsseiles im Kopplungsglied (19) zulässt.

Die Kinematik der Trommelbremse (3) mit selbsttätiger Nachstellung und hydraulischer und mechanischer Betätigung ist recht kompliziert, aber als solche im Stand der Technik bekannt.

In einer vereinfachten Betrachtungsweise bildet der Handbremshebel (25) bei Beginn der Krafteinleitung über das Lager (26) und die Rückstellfeder (22) mit dem Sekundärbacken (24) eine annähernd feste Baueinheit. Die auf das Kopplungslager (18) eingeleitete Zugkraft übt eine auf die Baueinheit nach links gerichtete Kraft aus. Diese Kraft ist bestrebt, diese Baueinheit um die Abstützung am Dom (30) nach links zu schwenken. Allerdings ist die Kraft der Rückstellfeder (22) in der Regel nicht so hoch bemessen, dass sie auch die durch die Niederhaltefeder (27) zwischen dem Belagblech (59) und den Auflageflächen (70) erzeugte Reibkraft des Sekundärbackens und die Reibkraft des Lippendichtringes während des Verschiebens des Kolbens im Radbremszylinder (32) übertragen könnte. Von daher scheidet dieser Mechanismus für den tatsächlichen Bewegungsablauf meistens aus.

Der Handbremshebel (25) schwenkt um die Lagerachse des Lagers (26). Der Handbremshebel (25) bildet, physikalisch betrachtet, bei Beginn der Krafteinleitung einen einarmigen Hebel, der während des Anstieges der Hebelkräfte zu einem zweiarmigen Hebel wird.

Das Schwenken des Handbremshebels (25) wird über die Ausnehmung (52), die Druckhülse (42), das Nachstellritzel (44), die Druckstange (43) und die Ausnehmung (53) auf das Stegblech (36) des Primärbackens (23) geleitet. Dieser wird gegen die Reibfläche (39) der Bremstrommel (4) gedrückt. Ein weiteres Schwenken des Handbremshebels (25) führt zu einem steilen Anstieg der Reaktionskraft in der Ausnehmung (52) des Handbremshebels (25). Der Handbremshebel (25) wird nun zu einem zweiarmigen Hebel, wobei der Drehpunkt in der Ausnehmung (52) liegt, und das Lager (26) das Ende des zweiten Hebelarmes bildet. Der Sekundärbacken (24) wird nun gegen die Reibfläche (39) der Bremstrommel (4) gedrückt. Die Reibkräfte werden über den Dom (30) in die fahrzeugfeste Ankerplatte (20) abgeleitet.

Die mechanische Betätigung der Trommelbremse (3) wird üblicherweise als Feststellbremse vorgesehen.

Um bei der oben beschriebenen Trommelbremse einer dauerhafte Vorspannung des Bowdenzugs sicherzustellen, ist ein Halteblech (60) der nachfolgend beschriebenen Art vorgesehen.

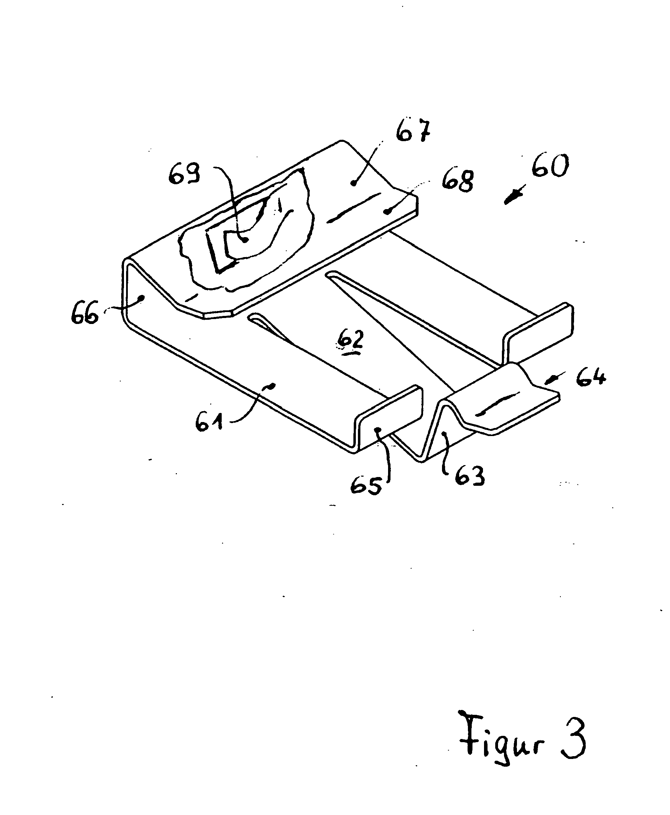

Fig. 3 zeigt das Halteblech (60) in vergrößerter perspektivischer Darstellung und Fig. 4 zeigt den Einsatz des Halteblechs (60) zusammen mit dem Sekundärbacken (24).

Das Halteblech (60) weist eine Ebene (61) auf, aus deren mittlerem Teil ein Federarm (62) nach unten in einem Winkel von etwa 15 Grad weggebogen ist. Der Federarm (62) weist an seinem freien Ende eine nach oben gerichtete rechtwinkelige Abbiegung (63) auf, an die sich eine weitere von der Anbindung des Federarmes (62) an die Ebene (61) weggerichtete Abbiegung (64) anschließt. Die rechten freien Enden (65) der Ebene (61) sind im rechten Winkel nach oben abgebogen.

Die Höhe der rechten freien, abgebogenen Enden (65) ist auf die Blechstärke des Handbremshebels (25) derart abgestimmt, dass bei Anlage der Ebene (61) an dem Handbremshebel (25) die freien Enden (65) nicht über die dem Stegblech (36) zugewandte Ebene des Handbremshebels (25) hinausstehen.

Die Höhe der Abbiegung (63) des Federarmes (62) ist so bemessen, dass bei Anlage des Federarmes (62) an der dem Stegblech (36) abgewandten Seite des Handbremshebels (25) die Abbiegung (64) auf der dem Handbremshebel (25) abgewandten Seite des Stegbleches (36) zu liegen kommen kann. Die Höhe ist minimal, vorzugsweise etwa einen halben bis einen Millimeter, größer als die Summe der Blechstärken des Handbremshebels (25) und des Stegbleches (36).

Im linken Bereich erstreckt sich eine weitere rechtwinkelig nach oben gerichtete Abbiegung (66), deren Höhe um etwa ein bis zwei Millimeter größer ist als die Blechstärke des Handbremshebels (25). An die Abbiegung (66) schließt sich eine weitere leicht nach unten zur Ebene (61) gerichtete Abbiegung (67) an. Der eingeschlossene Winkel zwischen der Abbiegung (66) und der Abbiegung (67) beträgt etwa 75 Grad. An die Abbiegung (67) folgt eine letzte Abbiegung (68), deren Ebene mit der Ebene (61) einen Winkel von etwa 15 Grad einschließt.

Die Ebene der Abbiegung (66) weist einen Durchbruch mit einer gewölbten Federzunge (69) auf.

Das Halteblech (60) wird auf den Handbremshebel (25) aufgeschoben, wobei die Abbiegung (68) auf der Oberfläche des Handbremshebels (25) gleitet, bis die Enden (65) den Handbremshebel (25) hintergreifen. Der Handbremshebel (25) weist eine Aussparung (71) auf, in die die Federzunge (69) einrastet und hierdurch die richtige Lage des Haltebleches (25) sichert. Dadurch, dass die Höhe der Abbiegung (66) größer ist als die Blechstärke des Handbremshebels (25) und die Abbiegung (69) geneigt zur Ebene (61) verläuft, wird der Handbremshebel (25) zwischen der Ebene (68) und der Ebene (61) mit einer konstruktiv vorgegeben Federkraft eingespannt. Das Halteblech (60) ist daher verliersicher über die große Lebensdauer der Trommelbremse (3) befestigt.

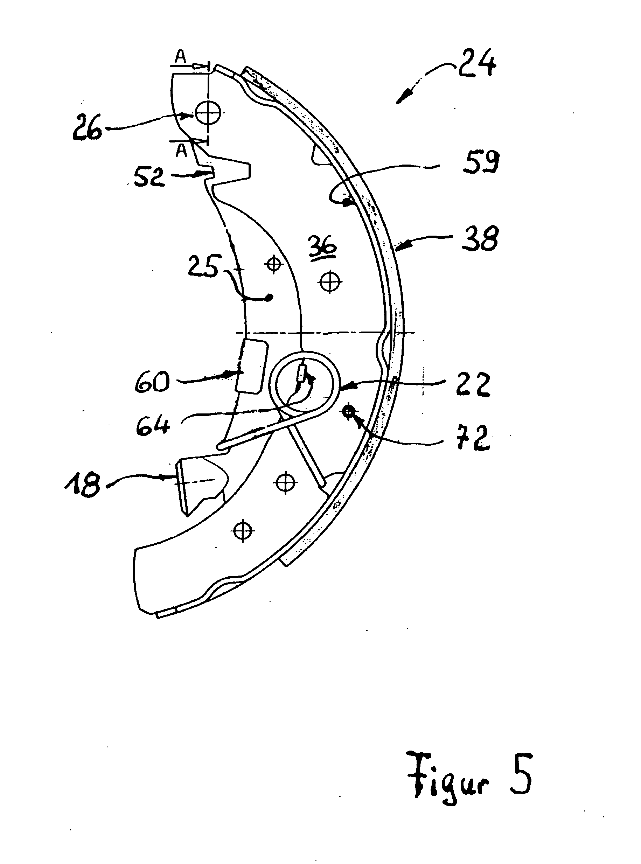

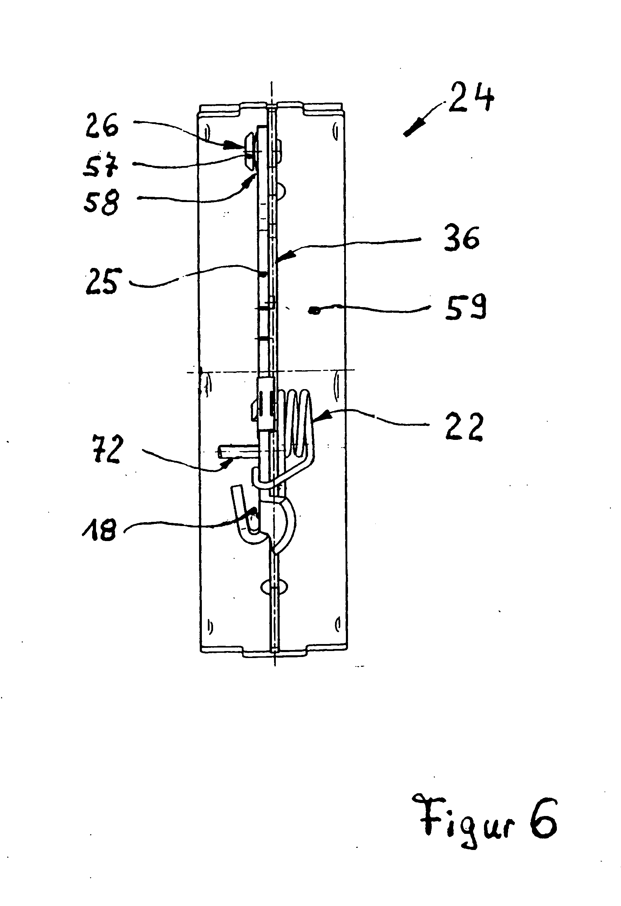

Die Figuren 4, 5 und 6 zeigen den Sekundärbacken (24) in einem Stadium der Vormontage. Der Handbremshebel (25) ist über das Lager (26) und das Stegblech (36) an dem Sekundärbacken (24) schwenkbar befestigt. Des weiteren ist die Rückstellfeder (22) in das Stegblech (36) und in den Handbremshebel (25) eingehangen. Das Halteblech (60) stützt sich mit der Abbiegung (69) an dem Stegblech (36) gegen die Kraft der Rückstellfeder (22) ab und verhindert dadurch ein weiteres Schwenken des Handbremshebels (25) unter das Stegblech (36).

In diesem vormontierten Zustand wird der Sekundärbacken (24) auf der Ankerplatte (20) montiert. Nach Montage des Radbremszylinders (32), des Primärbackens (23), der Nachstellungsteile und der Rückzugfedern (34, 35) ist die Trommelbremse (3) als solche fertig zusammengebaut. In diesem Stadium wird sie an die Achse angeschraubt, und die Bremstrommel wird montiert.

Nach oder auch schon während der Montage der Achse an der Karosserie wird das Handbremsseil (14) durch das Führungsrohr (21) geschoben, wobei das Kopplungsglied (19) des Handbremsseiles (14) selbsttätig in das Kopplungslager (18) des Handbremshebels (25) einrastet. Ein zu weites Durchschieben des Kopplungsgliedes (19) und eine damit einhergehende Gefahr der Fehlmontage wird durch einen Anschlag in Form einer Spannhülse (72) verhindert. Das Handbremsseil (14) wird mit dem Kopplungsglied (13) mit dem Kopplungslager (12) verbunden.

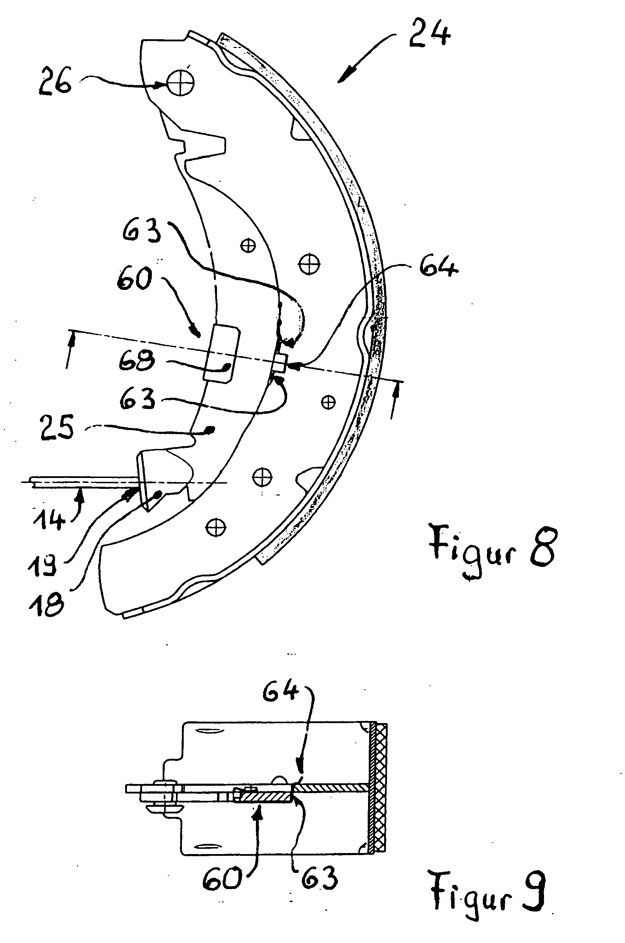

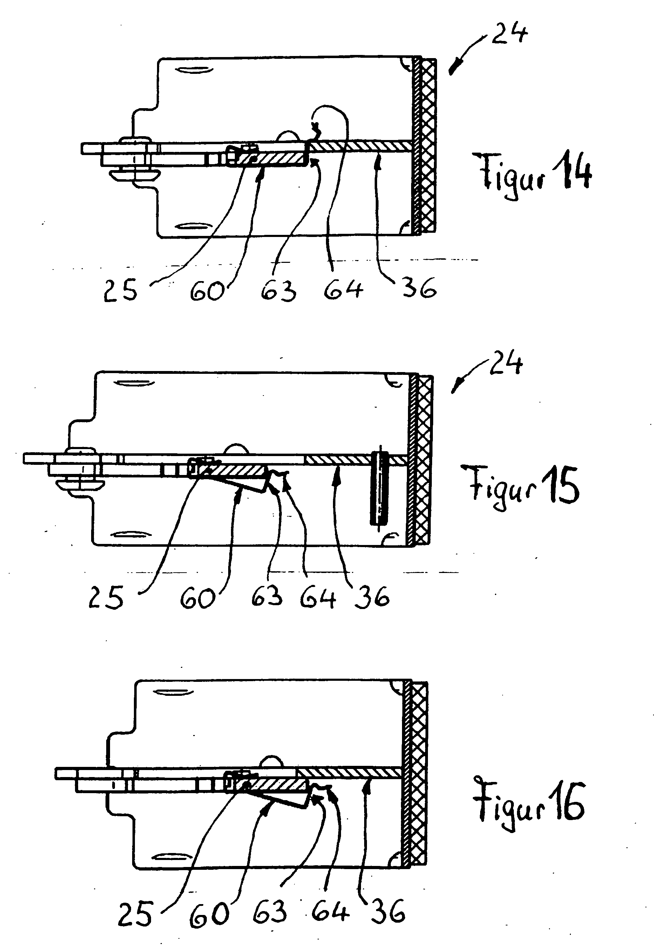

Die Vorspannung des Handbremsseiles (14) wird nun einreguliert. Dabei behält das Halteblech (60) die in den Figuren 8, 9 und 14 dargestellte Lage. Die Vorspannung des Handbremsseiles (14), vermindert um die Reibkräfte in den Gelenken und in dem Bowdenzug (2), überkommt nicht die Kraft der Rückstellfeder (22).

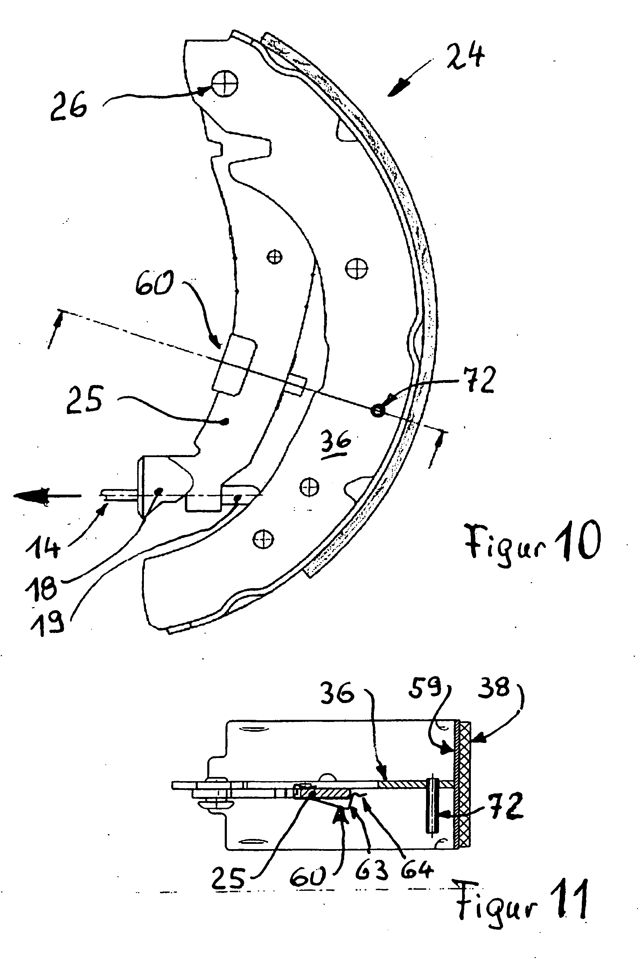

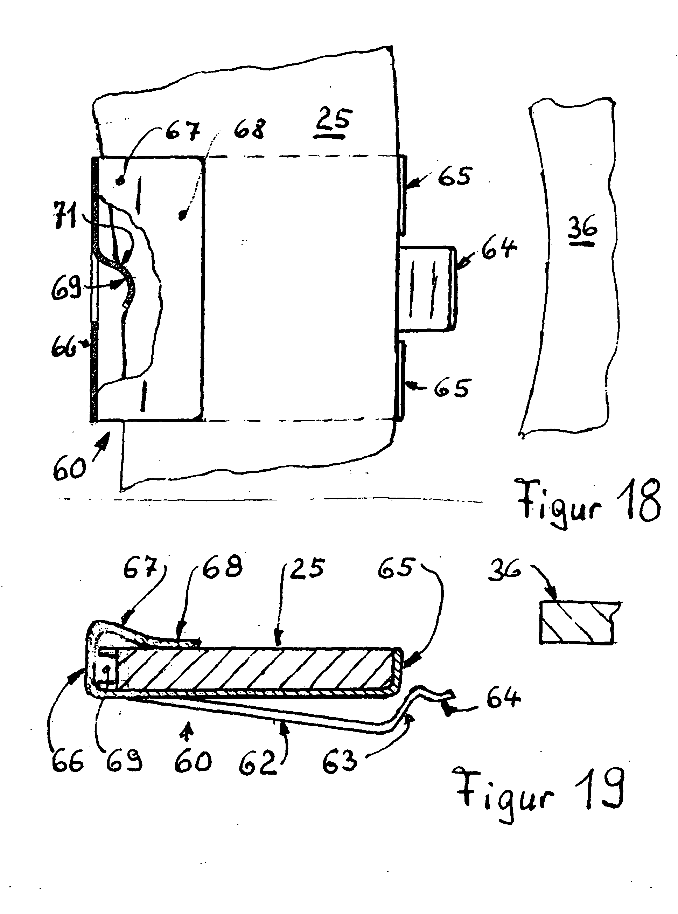

Nach der Einregulierung der Vorspannung des Handbremsseiles (14) wird einmal kräftig am Handbremsstock (8) gezogen. Dabei wird die Abbiegung (64) von dem Stegblech (36) entrastet und der Federarm (62) zieht die Abbiegung (64) soweit nach unten, dass die Abbiegung (64) unterhalb des Stegbleches (36) liegt. Dies ist in den Figuren 19, 11 und 15 dargestellt.

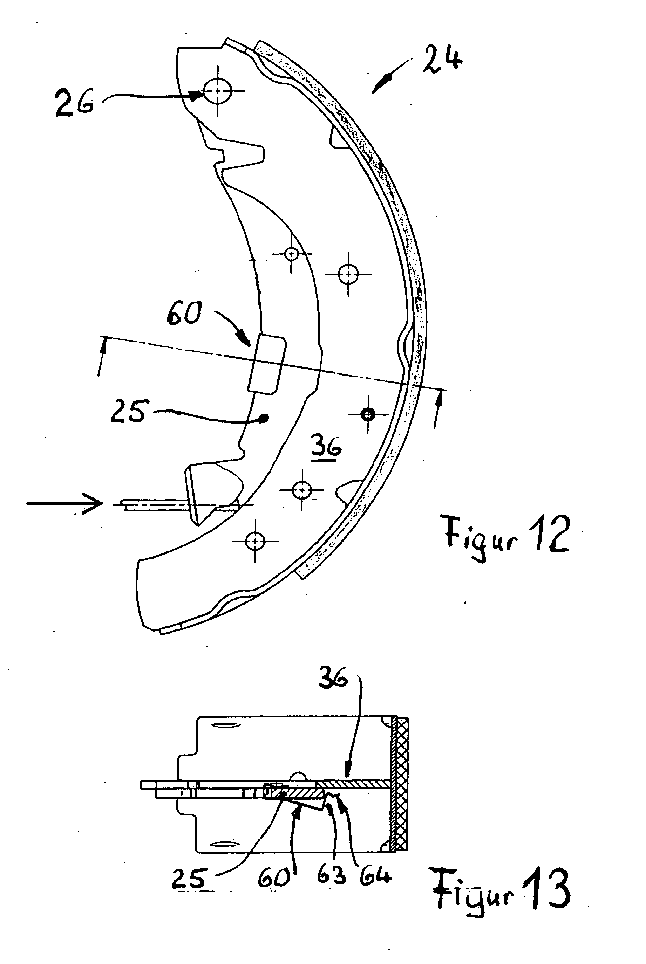

Wird nun der Handbremsstock (8) wieder in seine Ausgangsstellung gebracht, so zieht die Rückstellfeder (22) den Handbremshebel (25) zurück. Die Abbiegung (64) untergreift das Stegblech (36). Dies ist in den Figuren 12, 13 und 16 dargestellt. Längt sich nun im Laufe der Jahre das Handbremsseil (14), so wird durch die stetige Kraft der Rückstellfeder (22) eine konstruktiv festgelegte Vorspannung stets aufrechterhalten.

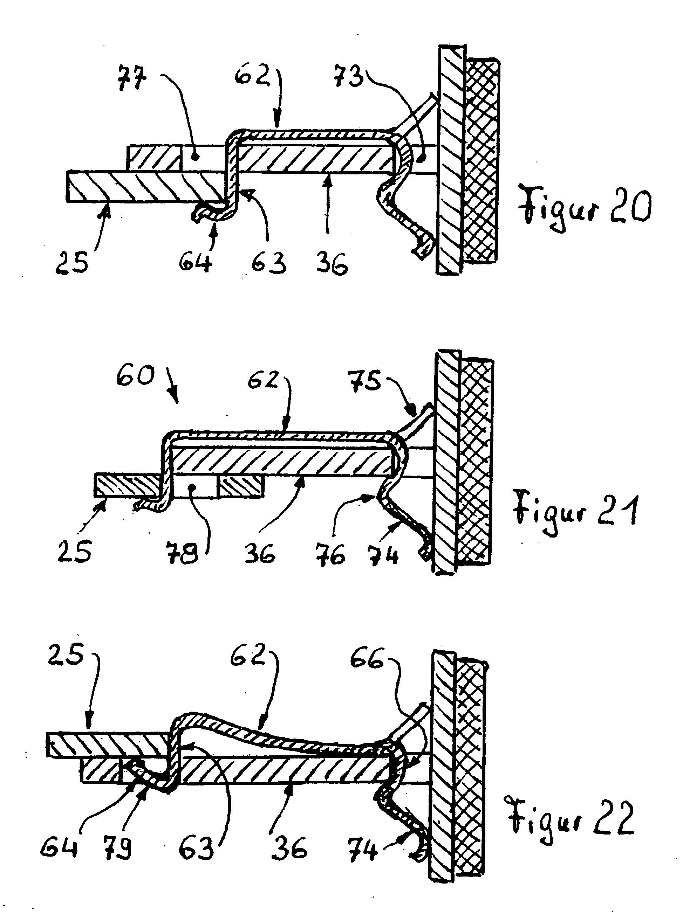

Die Figuren 20, 21 und 22 zeigen ein zweites, ein drittes und ein viertes Ausführungsbeispiel.

Bei diesen drei Ausführungsbeispielen wird das Halteblech (60) an dem Stegblech (36) befestigt.

Allen drei Ausführungen gemeinsam ist eine Aussparung (73) in dem Stegblech (36), die bis zum Belagblech (59) reicht. Ebenso ist allen drei Ausführungen gemeinsam der Federarm (62) und die sich an den Federarm (62) anschließende Abbiegung (66) mit der sich anschließenden Federzunge (74) und den beiden sich an den Federarm (62) anschließenden Federzungen (75). Die Federzungen (74, 75) stützen sich an dem Belagblech (59) ab und drücken dabei die Abbiegung (66) gegen das Stegblech (36). Die Federzungen (74, 75) bilden eine Dreipunktabstützung an dem Belagblech (59), wodurch der Federarm (62) sauber abgestützt ist. Die Federzunge (74) weist im Anschluss an die Abbiegung (66) die Form einer Welle (76) auf, wobei ein Teil dieser Welle (76) das Stegblech (36) hintergreift. Das Einrasten des Haltebleches (6) in der Aussparung (73) des Stegbleches (36) wird hierdurch sichergestellt.

An den Federarm (62) schließen sich eine Abbiegung (63) und an diese eine weitere Abbiegung (64) an.

Im zweiten Ausführungsbeispiel gemäß der Figur 20 durchgreifen die Abbiegungen (63, 64) des Federarmes (62) eine Aussparung (77) des Stegbleches (36). Die Abbiegung (64) untergreift den Handbremshebel (25). Die Kraft der Rückstellfeder (22) wird von dem Handbremshebel (25) über die Abbiegung (63) auf das Stegblech (36) geleitet.

Wird der Handbremshebel (25) nach dem Einregulieren der Vorspannung des Handbremsseiles (14) durch Ziehen des Handbremsstockes (8) von dem Stegblech (36) weggezogen, wird die Aussparung (77) freigegeben und der Federarm (62) rastet mit der Abbiegung (64) aus der Halterung des Handbremshebels (25). Der Federarm (62) zieht nun die Abbiegungen (63, 64) durch die Aussparung (77).

Wird der Handbremsstock (8) wieder in seine Grundstellung gebracht, so zieht die Rückstellfeder (22) den Handbremshebel (25) zurück und versieht das Handbremsseil dauerhaft mit einer festgelegten Vorspannung.

Das dritte Ausführungsbeispiel gemäß der Figur 21 unterscheidet sich von dem zweiten Ausführungsbeispiel nur dadurch, dass die Abbiegungen (63, 64) des Federarmes (62) eine Aussparung (78) des Handbremshebels (25) durchgreifen.

Sowohl im zweiten als auch im dritten Ausführungsbeispiel befindet sich der Handbremshebel (25) unterhalb des Stegbleches (36), also in dem Raum zwischen Stegblech (36) und Ankerplatte (20).

Das vierte Ausführungsbeispiel gemäß der Figur 22 unterscheidet sich von dem zweiten Ausführungsbeispiel lediglich dadurch, dass der Handbremshebel (25) oberhalb des Stegbleches (36) liegt mit der Folge, dass der Federarm (62) nach dem Ausrasten aus der Aussparung (77) soweit nach oben schwenken muss, dass der Handbremshebel (25) in den Freiraum zwischen der Abbiegung (64) und dem Stegblech (36) hineinschwenken kann. Dieses nach oben Schwenken wird jedoch begrenzt durch die Bremstrommel (4), zu der ein Mindestabstand von einigen Millimetern einzuhalten ist. Um dies sicherzustellen, ist die Abbiegung (64) derart gewinkelt, daß der Handbremshebel (25) bei Auftreffen auf diese gewinkelte Abbiegung (64) diese leicht anheben kann. Der Übergangsbereich (79) von der Abbiegung (64) zu der Abbiegung (63) gleitet dann auf dem Handbremshebel (25).

Durch die Erfindung wurde ein Halteblech (60) geschaffen, mit dem für die Erstmontage der Trommelbremse (3) der Handbremshebel (25) mit dem Stegblech (36) gegen die Kraft der Rückstellfeder (22) verriegelt wird.

Nach Montage des Bowdenzuges (2) und Einjustieren der Vorspannung des Handbremsseiles (14) kann durch kräftiges Ziehen am Handbremsstock (10) die Verriegelung gelöst werden.

Längt sich im Laufe vieler Jahre das Handbremsseil (14), so bleibt dennoch die Vorspannung des Handbremsseiles (14) stets erhalten.

### Bezugszeichenliste

- 1: Betätigungseinrichtung
- 2: Bowdenzug
- 3: Trommelbremse
- 4: Bremstrommel
- 5: Konsole
- 6: Befestigungsschrauben
- 7: Karosserie
- 8: Handbremsstock
- 9: Schwenkachse
- 10: Handgriff
- 11: Entriegelungsknopf
- 12: Kopplungslager, konsolenseitig
- 13: Kopplungsglied, konsolenseitig
- 14: Handbremsseil
- 15: Hülle
- 16: Ende der Hülle, konsolenseitig
- 17: Ende der Hülle, ankerplattenseitig
- 18: Kopplungslager, handbremshebelseitig
- 19: Kopplungsglied, handbremshebelseitig
- 20: Ankerplatte
- 21: Führungsrohr
- 22: Rückstellfeder
- 23: Primärbacken
- 24: Sekundärbacken
- 25: Handbremshebel
- 26: Lager
- 27: Niederhaltefeder
- 28: Niederhaltestift
- 29: Federteller
- 30: Dom
- 31: Anlageplatte
- 32: Radbremszylinder
- 33: Manschettendichtung
- 34: obere Rückzugfeder
- 35: untere Rückzugfeder
- 36: Stegblech
- 37: Reibfläche des Bremsbelages
- 38: Bremsbelag
- 39: Reibfläche der Bremstrommel
- 40: Lüftspiel
- 41: längenveränderbare Strebe
- 42: Druckhülse
- 43: Druckstange
- 44: Nachstellritzel
- 45: Sperrverzahnung
- 46: Nachstellhebel
- 47: Spannhülse
- 48: Nachstellfeder
- 49: rechter Hebelarm
- 50: Schaufel
- 51: linker Hebelarm
- 52: Ausnehmung im Handbremshebel
- 53: Ausnehmung im Primärbacken
- 54: U-förmige Aussparung in der Druckstange
- 55: Stufenzapfen
- 56: abgesetzter Bereich des Zapfens
- 57: Kopf
- 58: Tellerfeder
- 59: Belagblech
- 60: Halteblech
- 61: Ebene
- 62: Federarm
- 63: Abbiegung des Federarmes
- 64: Abbiegung
- 65: Ende
- 66: Abbiegung
- 67: Abbiegung
- 68: letzte Abbiegung
- 69: gewölbte Federzunge
- 70: Auflageflächen des Belagbleches auf der Ankerplatte
- 71: Aussparung im Handbremshebel
- 72: Spannhülse
- 73: Aussparung im Stegblech, angrenzend an das Belagblech
- 74: Federzunge
- 75: Federzunge
- 76: Welle
- 77: Aussparung im Stegblech
- 78: Aussparung
- 79: Übergangsbereich

## Patentansprüche

1. Halteblech (60) für einen Handbremshebel (25) einer Trommelbremse (3) mit einem Primärbacken (23) und einem Sekundärbacken (24) und einem an einem Stegblech (36) des Primärbackens (23) oder des Sekundärbackens (24) gelagerten Handbremshebel (25) und einer Rückstellfeder (22), die den Handbremshebel (25) stets zum Stegblech (36) hin zieht oder drückt, **dadurch gekennzeichnet, dass**
- das Halteblech (60) an dem Handbremshebel (25) oder an dem Stegblech (36) formschlüssig gehalten ist und
- das Halteblech (60) mit einer Abbiegung (63) eines Federarmes (62) die Kraft der Rückstellfeder (22) auf das Stegblech (36) leitet.

2. Halteblech (60) gemäß Anspruch 1, **dadurch gekennzeichnet, dass** sich an die Abbiegung (63) des Federarmes (62) eine weitere Abbiegung (64) anschließt.

3. Halteblech (60) gemäß einem der Ansprüche 1 oder 2, **dadurch gekennzeichnet, dass** in einer zusätzlichen Abbiegung (66) eine gewölbte Federzunge (69) ausgebildet ist.

4. Trommelbremse (3) mit einem Halteblech (60) gemäß einem der Ansprüche 1, 2 oder 3.

5. Trommelbremse (3) mit einem Halteblech (60) gemäß einem der Ansprüche 1, 2 oder 3, wobei die Trommelbremse einen Handbremshebel (25) aufweist, **dadurch gekennzeichnet, dass** eine gewölbte Federzunge (69) des Halteblech vorgesehen ist, die in eine Aussparung (71) im Handbremshebel (25) einrastet, um so das Halteblech (60) auf dem Handbremshebel (25) zu positionieren und dessen Lage dauerhaft zu sichern.

6. Verfahren zum Erzeugen einer dauerhaften Vorspannung eines Bowdenzugs (2) in einer Trommelbremse (3), die eine Bremstrommel (4) aufweist, wobei die Trommelbremse (3) hydraulisch und mechanisch betätigbar ist und eine selbsttätige Nachstellung aufweist mit einer längenveränderbaren Strebe (41), die mittels eines Klinken-Rastrad-Getriebes nachstellbar ist, wobei sich die Strebe (41) mit einem Ende an dem einen der beiden Bremsbacken, nämlich Primärbacken (23) oder Sekundärbacken (24), abstützt und mit einem anderen Ende an der Ausnehmung (52) des Handbremshebels (25) abstützt, der an dem anderen der beiden Bremsbacken, Sekundärbacken (24) bzw. Primärbacken (23), gelagert ist, wobei eine Rückstellfeder (22) den Handbremshebel (25) stets zu einem Stegblech (36) hin zieht oder drückt, an dem der Handbremshebel (25) gelagert ist, **dadurch gekennzeichnet, dass** ein Halteblech (60), das auf dem Handbremshebel (25) oder dem Stegblech (36) gehalten ist, bei der Erstmontage der Trommelbremse (3) mittels einer mit einer in Entriegelungsrichtung wirkenden Federkraft belasteten Abbiegung (63), die zwischen den Handbremshebel (25) und das Stegblech (36) greift, ein Schwenken des Handbremshebels (25) um ein Lager (26) zum Stegblech (36) hin blockiert; eine sich an die Abbiegung (63) anschließende weitere Abbiegung (64), die sich auf dem Stegblech (36) oder dem Handbremshebel (25) abstützt und die in Entriegelungsrichtung auf die Abbiegung (63) wirkende und nicht von dem Reibschluss zwischen Handbremshebel (25) und Stegblech (36) aufgenommene Federkraft ableitet, nach Montage des Bowdenzuges (2) und Einjustieren der Vorspannung des Handbremsseiles (14) kräftig mittels des Handbremsstocks (8) gezogen wird, wobei der Handbremshebel (25) um ein Lager (26) schwenkt und sich von dem Stegblech (3,6) entfernt, und wobei die Abbiegung (64) auf dem Stegblech (36) oder dem Handbremshebel (25) gleitet bis der Federarm (62) die Abbiegungen (63, 64) entriegelt, und die Kraft der Rückstellfeder (22) stets eine vorgelegte Vorspannung eines Handbremsseiles (14) aufrecht hält.

## Claims

1. Retaining plate (60) for a hand brake lever (25) of a drum brake (3) having a primary shoe (23) and a secondary shoe (24) and a hand brake lever (25), which is mounted on a web plate (36) of the primary shoe (23) or of the secondary shoe (24), and a resetting spring (22), which pulls or presses the hand brake lever (25) constantly towards the web plate (36), **characterized in that**
- the retaining plate (60) is held positively on the hand brake lever (25) or on the web plate (36), and
- the retaining plate (60) by means of a bend (63) of the spring arm (62) transmits the force of the resetting spring (22) to the web plate (36).

2. Retaining plate (60) according to claim 1, **characterized in that** the bend (63) of the spring arm (62) is adjoined by a further bend (64).

3. Retaining plate (60) according to one of claims 1 or 2, **characterized in that** in an additional bend (66) a curved spring tongue (69) is formed.

4. Drum brake (3) having a retaining plate (60) according to one of claims 1, 2 or 3.

5. Drum brake (3) having a retaining plate (60) according to one of claims 1, 2 or 3, wherein the drum brake comprises a hand brake lever (25), **characterized in that** a curved spring tongue (69) of the retaining plate is provided, which latches into a cutout (71) in the hand brake lever (25) in order thereby to position the retaining plate (60) on the hand brake lever (25) and permanently secure the position thereof.

6. Method of generating a lasting bias of a Bowden cable (2) in a drum brake (3) comprising a brake drum (4), wherein the drum brake (3) is actuable hydraulically and mechanically and has an automatic readjustment device comprising a variable-length strut (41), which is readjustable by means of a pawl and ratchet wheel mechanism, wherein the strut (41) is supported by one end on the one of the two brake shoes, namely primary shoe (23) or secondary shoe (24), and by another end on the recess (52) of the hand brake lever (25), which is mounted on the other of the two brake shoes, secondary shoe (24) or primary shoe (23), wherein a resetting spring (22) pulls or presses the hand brake lever (25) constantly towards a web plate (36), on which the hand brake lever (25) is mounted, **characterized in that** a retaining plate (60), which is held on the hand brake lever (25) or the web plate (36), during initial assembly of the drum brake (3) blocks a pivoting of the hand brake lever (25) about a bearing (26) towards the web plate (36) by means of a bend (63), which is loaded with a spring force acting in unlocking direction and engages between the hand brake lever (25) and the web plate (36); a further bend (64), which adjoins the bend (63) and is supported on the web plate (36) or the hand brake lever (25) and removes the spring force acting in unlocking direction upon the bend (63) and not taken up by the frictional engagement between hand brake lever (25) and web plate (36), after assembly of the Bowden cable (2) and adjustment of the initial tension of the hand brake cable (14) is pulled powerfully by means of the hand brake stem (8), wherein the hand brake lever (25) pivots about a bearing (26) and moves away from the web plate (36), and wherein the bend (64) slides on the web plate (36) or the hand brake lever (25) until the spring arm (62) releases the bends (63, 64), and the force of the resetting spring (22) constantly maintains a produced initial tension of a hand brake cable (14).

## Revendications

1. Tôle de retenue (60) pour levier de frein à main (25) d'un frein à tambour (3) comportant une mâchoire primaire (23) et une mâchoire secondaire (24) et un levier de frein à main (25) monté sur une tôle d'âme (36) de la mâchoire primaire (23) et de la mâchoire secondaire (24), et un ressort de rappel (22) qui tire ou presse en permanence le levier de frein à main (25) vers la tôle d'âme (36), **caractérisée en ce que**
- la tôle de retenue (60) est maintenue par complémentarité de forme sur le levier de frein à main (25) ou sur la tôle d'âme (36) et
- la tôle de retenue (60) dirige la force du ressort de rappel (22) sur la tôle d'âme (36) par le biais d'une pliure (63) d'un bras de ressort (62).

2. Tôle de retenue (60) selon la revendication 1, **caractérisée en ce qu'**une autre pliure (64) succède à ladite pliure (63) du bras de ressort (62).

3. Tôle de retenue (60) selon l'une des revendications 1 ou 2, **caractérisée en ce qu'**une langue de ressort bombée (69) est formée dans une pliure supplémentaire (66).

4. Frein à tambour (3) comportant une tôle de retenue (60) selon l'une des revendications 1, 2 ou 3.

5. Frein à tambour (3) comportant une tôle de retenue (60) selon l'une des revendications 1, 2 ou 3, le frein à tambour (3) présentant un levier de frein à main (25), **caractérisé en ce qu'**il est prévu sur la tôle de retenue une langue de ressort bombée (69) qui s'enclenche dans une réservation (71) aménagée dans le levier de frein à main (25) pour positionner ainsi la tôle de retenue (60) sur le levier de frein à main (25) et sécuriser durablement sa position sur ce dernier.

6. Procédé pour produire une précontrainte durable du câble Bowden (2) dans un frein à tambour (3), qui présente un tambour de freinage (4), le frein à tambour étant actionnable hydrauliquement et mécaniquement et présentant un rattrapage de jeu automatique avec une traverse (41) de longueur variable et ajustable au moyen d'un engrenage à roue à rochet et cliquet, la traverse (41) prenant appui, à une de ses extrémités, sur une des deux mâchoires de frein, soit sur la mâchoire primaire (23) ou sur la mâchoire secondaire (24), et, à l'autre de ses extrémités, sur la réservation (52) du levier de frein à main (25) qui est monté sur l'autre des deux mâchoires de frein, soit sur la mâchoire secondaire (24) ou la mâchoire primaire (23), un ressort de rappel (22) tirant ou pressant en permanence le levier de frein à main (25) vers la tôle d'âme (36) sur laquelle est monté le levier de frein à main (25), **caractérisé en ce que** lors du premier montage du frein à tambour (3), une tôle de retenue (60) maintenue sur le levier de frein à main (25) ou sur la tôle d'âme (36) bloque en direction de la tôle d'âme le pivotement du levier du frein à main (25) autour d'un palier (26), au moyen d'une pliure (63) qui est sollicitée par une force élastique agissant dans une direction de déverrouillage et vient en prise entre le levier de frein à main (25) et la tôle d'âme (36) ; une autre pliure (64), laquelle succède à ladite pliure (63) et prend appui sur la tôle d'âme (36) ou sur le levier de frein à main (25) et détourne la force de ressort agissant sur la pliure (63) dans le sens de déverrouillage et non absorbée par l'engagement par friction entre le levier de frein à main (25) et la tôle d'âme (36), est tirée énergiquement au moyen d'une tige de commande de frein à main (8) après montage du câble Bowden (2) et ajustage de la précontrainte du câble de frein à main (14), le levier de frein à main (25) pivotant autour d'un palier (26) et s'éloignant de la tôle d'âme (36), et la pliure (64) glissant sur la tôle d'âme (36) ou sur le levier de frein à main (25) jusqu'à ce que le bras de ressort (62) déverrouille les pliures (63, 64), et la force du ressort de rappel (22) maintenant en permanence la précontrainte prédéfinie du câble de frein à main (14).
